# EUROPÄISCHE PATENTSCHRIFT

(11) **EP 1 935 543 B1**
(45) Veröffentlichungstag und Bekanntmachung des Hinweises auf die Patenterteilung: **11.03.2015**
(21) Anmeldenummer: 07021064.6
(22) Anmeldetag: 27.10.2007
(51) Int. Cl.: B23D 45/04, B23D 59/00

(54) **Schrägschwenkbare Säge**
Obliquely pivotable saw
Scie pivotant obliquement

(30) Priorität: 18.12.2006 DE 102006059752
(43) Veröffentlichungstag der Anmeldung: 25.06.2008
(73) Patentinhaber: Festool GmbH, 73240 Wendlingen am Neckar (DE)
(72) Erfinder: Albrecht, Hans-Peter, 73240 Wendlingen (DE)
(74) Vertreter: Patentanwälte Bregenzer und Reule Partnerschaftsgesellschaft mbB

(56) Entgegenhaltungen:
- EP-A- 1 000 717
- EP-A- 1 410 886
- EP-A- 1 623 803
- EP-A- 1 716 986
- EP-A- 1 738 850
- US-A1- 2004 089 125
- US-A1- 2006 011 036

## Beschreibung

Die Erfindung betrifft eine Säge, insbesondere eine Gehrungssäge, nach dem Oberbegriff des Anspruches 1.

Die Sägeeinrichtung ist zur Einstellung von Schrägschnitten um eine Schrägschwenkbasis schrägschwenkbar. Bei Sägen, insbesondere bei Sägen für die Holzbearbeitung, ist es üblich, dass die Sägeeinrichtung manuell verschwenkt wird. Wenn die Sägeeinrichtung ihre vertikale Lage verlässt, das heißt zur Seite geschwenkt ist, muss sie von einem Bediener gehalten werden. Dadurch ist es schwierig, eine gewünschte Schrägschwenkposition exakt einzustellen.

Eine Säge mit einem durch einen Servo-Motor angetriebenen Schrägschwenkgetriebe geht aus EP 1 000 717 A2 hervor.

Es ist daher ist Aufgabe der vorliegenden Erfindung, eine Säge bereitzustellen, deren Sägeeinrichtung um eine horizontale Schrägschwenkachse bequem und exakt einstellbar ist.

Zur Lösung der Aufgabe ist eine Säge gemäß der technischen Lehre des Anspruchs 1 vorgesehen.

Das Schrägschwenkgetriebe umfasst eine manuell betätigbare Betätigungseinrichtung.

Das Schrägschwenkgetriebe ist an der Rückseite der Säge angeordnet. An der Rückseite befindet sich die Schrägschwenkbasis. Die Betätigungseinrichtung steht zu einer Vorderseite der Säge vor, so dass das Schrägschwenkgetriebe von der Vorderseite her bedienbar ist. Von der Vorderseite her werden Werkstücke in den Bearbeitungsbereich der Säge gebracht. Die Säge ist somit insgesamt von der Vorderseite her bedienbar.

Durch manuelle Betätigung des Getriebes kann die Sägeeinrichtung in die gewünschte Schrägschwenkposition geschwenkt werden. Beispielsweise ist das Getriebe ein Untersetzungsgetriebe, was die exakte Einstellung der gewünschten Schrägschwenkposition erleichtert. Das Schrägschwenkgetriebe kann eine Hemmung aufweisen oder zumindest so schwergängig sein, dass die Sägeeinrichtung nur durch Betätigung des Getriebes verschwenkbar ist. Zweckmäßigerweise weist das Schwenkgetriebe eine Selbsthemmung auf.

Die Sägeeinrichtung ist vorteilhaft oberhalb einer Auflagefläche, z.B. eines Werkstück-Tisches, zum Ablegen eines zu bearbeitenden Werkstück angeordnet. Die Schrägschwenkbasis enthält z.B. einen nach oben vor die Auflagefläche vorstehenden Arm.

Das Schrägschwenkgetriebe umfasst zweckmäßigerweise ein Zahngetriebe. Es versteht sich, dass auch andere Getriebeformen, beispielsweise Seil-, Ketten- oder Zahnriemengetriebe, möglich sind.

An der Schrägschwenkbasis ist vorteilhaft eine bogenförmige Zahnung angeordnet, mit der ein Zahnrad des Schrägschwenkgetriebes kämmt. Das Zahnrad kann beispielsweise ein Abtriebszahnrad oder Antriebszahnrad sein. Die bogenförmige Zahnung enthält beispielsweise einen Zahnkranz eine Lochreihe oder dergleichen.

Zweckmäßigerweise ist eine Kraftübertragungsanordnung zwischen ein Antriebszahnrad und ein Abtriebszahnrad des Schrägschwenkgetriebes geschaltet. Die Kraftübertragungsanordnung umfasst beispielsweise eine Kette, einen Zahnriemen, einen Seilzug oder dergleichen. Die Kraftübertragungsanordnung umfasst jedoch zweckmäßigerweise mindestens ein Zahnrad. Mit Hilfe der Kraftübertragungsanordnung ist beispielsweise ein Abstand zwischen dem Abtriebszahnrad und dem Antriebszahnrad des Getriebes überbrückbar. Ferner kann mit der Kraftübertragungsanordnung ein Übersetzungsverhältnis des Getriebes eingestellt werden.

Das Schrägschwenkgetriebe ist vorteilhaft ein Untersetzungsgetriebe. Die erforderliche Bedienkraft oder Motorkraft an der Antriebsseite des Getriebes ist daher gering.

Die Sägeeinrichtung ist zur Durchführung von Linearschnitten an einem Sägeschlitten angeordnet. Der Sägeschlitten ist an einer Linearführung entlang einer Linearführungsachse linear geführt. Die Linearführung ihrerseits ist wiederum an der Schrägschwenkbasis schwenkbar. Beispielsweise ist die Linearführung an einem Schwenkträger angeordnet. Somit ist eine Zug-Kappsäge realisiert, deren Sägeeinrichtung um eine horizontale Achse schwenkbar ist, wobei der jeweilige Schrägschwenkwinkel mit dem erfindungsgemäßen Schrägschwenkgetriebe bequem und exakt einstellbar ist.

Eine Drehrichtung der Betätigungseinrichtung und eine Schwenkrichtung der Sägeeinrichtung sind vorteilhaft gleichsinnig. Für den Bediener ist somit anhand der Drehrichtung erkennbar, wohin die Sägeeinrichtung schwenkt.

Die Betätigungseinrichtung ist an der obengenannten Linearführung angeordnet, an der die Sägeeinrichtung linear geführt ist. Die Linearführung steht z.B. zur Vorderseite der Säge vor den Schwenkträger vor.

Die Linearführung enthält vorteilhaft ein zur Vorderseite der Säge vorstehendes, beispielsweise rohrartiges Linearführungselement. Das Linearführungselement kann auch T-förmig sein oder an einer Seite offen sein, z.B. U-förmig sein. Eine Welle der Betätigungseinrichtung befindet sich vorteilhaft im Innenraum des Linearführungselementes, beispielsweise eines Führungsrohres. Das Linearführungselement hat eine Doppelfunktion: einerseits dient es zur linearen Führung des Sägeschlittens und andererseits ist dort die Betätigungseinrichtung platzsparend und z.B. einen Bearbeitungsbereich der Säge nicht störend angeordnet. Eine Bedienhandhabe der Betätigungseinrichtung steht vor das vordere, freie Ende des Linearführungselementes vor.

Die Säge kann zusätzlich zu dem Schrägschwenkgetriebe eine Federanordnung aufweisen, die bei einem Schwenken der Sägeeinrichtung um die Schrägschwenkachse aus einer Grundposition in Richtung einer schrägen Position vorgespannt wird. Die Federanordnung ist beispielsweise in einem Gehäuse der Schrägschwenkbasis angeordnet. Die Federanordnung wirkt somit einer Schwerkraft der Sägeeinrichtung entgegen, die beim Schwenken in Richtung von schrägen Positionen oder ausgelenkten Positionen auftritt.

Mit einer optional vorhandenen Feststelleinrichtung ist die jeweilige Schrägschwenkposition des Schwenkträgers festleg-bar. Die Feststelleinrichtung enthält vorteilhaft eine Klemmeinrichtung, die die Schrägschwenkposition durch eine Klemmung fixiert.

Die Klemmeinrichtung umfasst zweckmäßigerweise ein Klemmteil, das in Richtung seiner Klemmstellung durch eine Klemm-Federanordnung beaufschlagt ist. Die Klemmeinrichtung bildet sozusagen eine Federspeicher-Klemmeinrichtung. Das Klemmteil umfasst beispielsweise einen Klemmhebel. Vorteilhaft ist vorgesehen, dass die Klemm-Federanordnung auf einen längeren Hebelarm des Klemmhebels wirkt, während der kürzere Hebelarm mit einer Klemmbasis klemmt. Dadurch werden die Kräfte der Federanordnung verstärkt.

Zweckmäßigerweise ist die Klemmeinrichtung mit einer Klemm-Betätigungshandhabe ausgestattet. Die Betätigungshandhabe umfasst beispielsweise einen schwenkbaren Schwenkhebel-Handgriff zur Betätigung der Klemmeinrichtung. Bei dem Schwenkhebel-Handgriff ist es vorteilhaft, wenn ein kürzerer Hebelarm der Betätigungsarm ist, der auf die Klemmeinrichtung wirkt, beispielsweise das federbeaufschlagte Klemmteil, während ein längerer Hebelarm als Bedienhandgriff dient.

Der Schwenkhebel-Handgriff ist vorzugsweise winkelig. Ein längerer Schenkel des Handgriff-Winkels dient als Betätigungshandhabe, während der kürzere Hebel auf das federbeaufschlagte Klemmteil wirkt.

Vorteilhaft weist die Säge eine Schrägschwenkwinkel-Vorwahleinrichtung auf, mit der ein jeweiliger Schrägschwenkwinkel der Sägeeinrichtung vor dem Verstellen mittels des Schrägschwenkgetriebes vorwählbar ist. Die vorgewählte Schrägschwenkposition wird beim Schrägstellen mit Hilfe des Schrägschwenkgetriebes sozusagen angefahren.

Die Vorwahleinrichtung enthält beispielsweise einen entsprechend dem gewünschten Schrägschwenkwinkel längsverstellbaren Vorsprung, der mit einer Stufenanordnung zusammenwirkt. Die Stufenanordnung ist an der Schrägstellbasis angeordnet und wird beispielsweise durch eine Stufenscheibe gebildet. Auch die Schrägstellbasis, z.B. deren Gehäuse, könnte stufenartig ausgestaltet sein. Beim Erreichen des gewünschten Schrägstellwinkels schlägt der Vorsprung, der z.B. an einem längsverstellbaren Vorsprungelement angeordnet ist, in der gewünschten Schrägposition an einer Stufe der Stufenanordnung an. Der Vorsprung ist zweckmäßigerweise durch eine Feder beaufschlagt. Der Vorsprung gibt vorteilhafterweise nach oder weicht aus, wenn er mit einer größeren als der maximal zulässigen Anschlagkraft gegen eine Stufe der Stufenanordnung anschlägt. Hierfür ist beispielsweise eine Federanordnung vorgesehen, die den Vorsprung gegen die Stufe beaufschlagt.

Die Stufenanordnung, z.B. die Stufenscheibe, ist zweckmäßigerweise neben der bogenförmigen Zahnung angeordnet, was platzsparend ist. Beispielsweise steht die Stufenscheibe nach oben vor die Zahnung vor.

Die Vorwahleinrichtung ist zweckmäßigerweise nur dann betätigbar, wenn die Klemmeinrichtung in ihrer Lösestellung ist. Beispielsweise überdeckt die Klemm-Betätigungshandhabe eine Vorwahl-Betätigungshandhabe der Vorwahleinrichtung ganz oder teilweise, wenn die Klemmeinrichtung in der Klemmstellung ist. Wird die Klemm-Betätigungshandhabe jedoch in die KlemmFreigabestellung oder Lösestellung gebracht, gibt sie die Vorwahl-Betätigungshandhabe frei, so dass an ihr der gewünschte Schrägschwenkwinkel einstellbar ist. Die Betätigungshandhabe kann die Vorwahl-Betätigungshandhabe ganz bedecken. Es ist aber auch denkbar, dass die Vorwahl-Betätigungshandhabe eine Durchtrittsöffnung an der Klemm-Betätigungshandhabe durchdringt, aber in der Klemmstellung der Klemmeinrichtung nicht so weit vor die Klemm-Betätigungshandhabe vorsteht, dass die Vorwahl-Betätigungshandhabe durch einen Bediener ergreifbar ist.

Die Sägeeinrichtung ist vorteilhafterweise um eine Kappachse schwenkbar gelagert. Somit bildet die Säge eine Kappsäge. Im Zusammenhang mit der vorgenannten Linearführungseinrichtung bildet die Säge eine Zug-Kappsäge.

Nachfolgend wird ein Ausführungsbeispiel der Erfindung anhand der Zeichnung erläutert. Es zeigen:

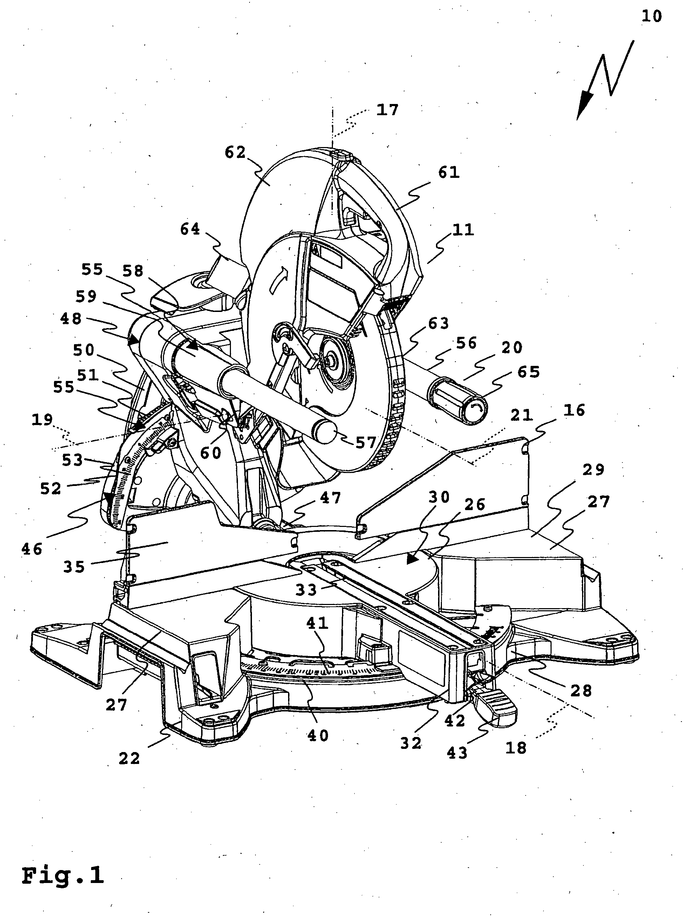

- Figur 1: eine Zug-Kappsäge mit einer schrägschwenkbaren Sägeeinrichtung in Vertikalposition,
- Figur 2: die Säge gemäß Figur 1 mit in eine Schrägposition geschwenkter Sägeeinrichtung,

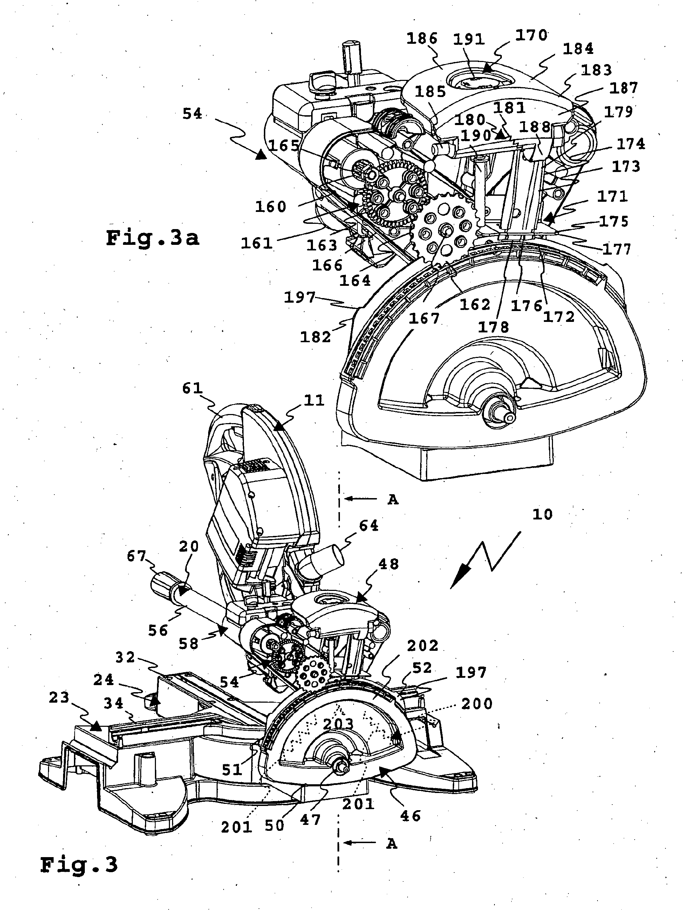

- Figur 3: die Säge gemäß Figur 1 von hinten, wobei ein Gehäuse eines Schrägschwenkgetriebes teilweise entfernt ist, so dass das Schrägschwenkgetriebe sichtbar ist,
- Figur 3a: einen Detailausschnitt aus Figur 3 mit dem Schrägschwenkgetriebe,

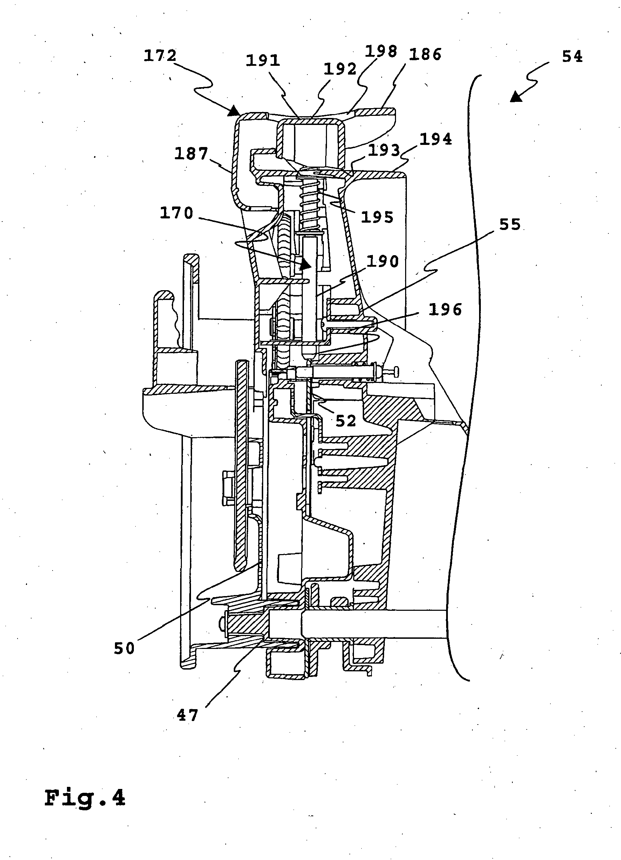

- Figur 4: eine Querschnittsansicht des Schrägschwenkgetriebes gemäß Figur 3, etwa entlang einer Linie A-A.

Eine Säge 10 hat eine Sägeeinrichtung 11 mit einem drehbar gelagerten Kreis-Sägeblatt 12, das durch einen Antriebsmotor 13 antreibbar ist. Somit bildet die Säge 10 eine Werkzeugmaschine 14 zur trennenden Bearbeitung eines Werkstücks 15. Die Sägeeinrichtung 11 ist zum Sägen des Werkstücks 15 in mehreren Freiheitsgraden beweglich: die Sägeeinrichtung 11 ist um eine vertikale, das heißt in y-Richtung verlaufende Drehachse 17 drehbar, um eine horizontale, in z-Richtung verlaufende Schrägschwenkachse 18 in verschiedene Schrägschwenkpositionen schrägverschwenkbar, um eine Kappschwenkachse 19 schwenkbar und zudem noch parallel zur Schrägschwenkachse 18 an einer Linearführung 20, d.h. in z-Richtung, linear verstellbar.

Durch Drehen bzw. Schwenken der Sägeeinrichtung 11 um die Drehachse 17 bezüglich eines Vertikalanschlages 16 können Gehrungsschnitte durchgeführt werden. Somit erfüllt die Säge 10 die Funktion einer Gehrungssäge. Die Möglichkeit, die Sägeeinrichtung 11 um die Kappschwenkachse 19 zu schwenken, macht die Säge 10 zu einer Kappsäge. Der Linearfreiheitsgrad, die Sägeeinrichtung 11 an der Linearführung 20 entlang einer Linearführungsachse 21 linear hin und her zu bewegen bzw. zu ziehen, kennzeichnet die Säge 10 als eine Zug-Säge und im Zusammenhang mit dem Kappschwenken als Zug-Kappsäge. Durch Schrägschwenken der Sägeeinrichtung 11 um die Schrägschwenkachse 18 sind schräge Schnitte möglich.

Ein Maschinenbett 22 der Säge 10 bildet eine Schwenkbasis 23 für ein Schwenkteil 24, das um die Drehachse 17, die insoweit eine Schwenkachse bildet, drehbar an der Schwenkbasis 23 gelagert ist. Das Maschinenbett 22 ist mit Füßen 25 auf einem Untergrund abstellbar. An den Füßen 25 können Befestigungseinrichtungen vorgesehen sein, beispielsweise Höhenverstelleinrichtungen und/oder Schrauböffnungen zum Anschrauben an dem Untergrund.

Ein im Wesentlichen zylindrischer Werktisch-Körper 26 des Schwenkteils 24 ist zwischen Werkstücktisch-Vorsprüngen drehbar aufgenommen, die vor ein Bodenteil 28 der Schwenkbasis 23 seitlich nach oben vorstehen. Oberseiten des Körpers 26 und der Vorsprünge 27 bilden eine Auflagefläche 29 eines Werkstücktischs 30 zum Auflegen des Werkstücks 15.

Radial innere Vorderseiten der Vorsprünge 27 sind korrespondierend mit dem runden Außenumfang des Körpers 26 rund. Vertikale Seitenflächen 31 der Vorsprünge 27 bilden Schwenkanschläge für einen Betätigungsarm 32 des Schwenkteils 24, der nach radial außen vor den Körper 26 vorsteht. Ein Sägeschlitz 33 erstreckt sich an Auflagefläche 29 des Körpers 26 etwa von der Drehachse 17 bis zum radial äußeren, freien Ende des Betätigungsarms 32. Auch die Oberseite des Betätigungsarms 32 bildet eine Auflagefläche des Werkstücktisches 30.

An der Oberseite der Vorsprünge 27 ist ein Anschlagteil 34 angeordnet, an dem Anschlagplatten 35 zur Bildung des Vertikalanschlages 16 befestigbar sind. Zwischen den Anschlagplatten 35 ist ein Freiraum vorhanden.

Das Schwenkteil 24 ist bezüglich der Drehachse 17 mit Hilfe einer Rasteinrichtung 36 oder einer Klemmeinrichtung 37 drehfest festlegbar. Die Rasteinrichtung 36 verrastet mit einer Rastbasis 38 an Rastpositionen. Die Klemmeinrichtung 37 ist an einer Klemmbasis 39 auch zwischen den Rastpositionen festlegbar.

Ein Bogenteil 40, das an einer Vorderseite des Bodenteils 28 angeordnet ist, bildet die Rastbasis 38 und die Klemmbasis 39. An einer Oberseite des Bogenteils 40 ist eine Schwenkwinkelskala 41 angeordnet.

Eine Rast-Betätigungshandhabe 42 und eine Klemm-Betätigungshandhabe 43 stehen nach radial außen vor den Betätigungsarm 32 einer Rast-Betätigungseinrichtung 44 und einer Klemm-Betätigungseinrichtung 45 vor. Zumindest die Klemm-Betätigungshandhabe 43 bildet eine Bedienhandhabe zum Schwenken des Schwenkteils 24. Mit den Betätigungseinrichtungen 44, 45 können die Rasteinrichtung 36 und die Klemmeinrichtung 37 zwischen einer das Schwenkteil an der Schwenkbasis 23 drehfest haltenden Haltestellung und einer ein Schwenken ermöglichenden Freigabestellung verstellt werden.

Die Betätigungshandhaben 42, 43 sind unmittelbar nebeneinander angeordnet. Somit kann mit einer Hand die Klemm-Betätigungseinrichtung zwischen einer Klemmfreigabestellung und einer Klemmstellung verstellt werden, während dieselbe Hand die Rast-Betätigungseinrichtung in der Rastfreigabestellung hält, so das die Rasteinrichtung 36 nicht mit der Rastbasis 38 verrastet. Ein Schwenkwinkel ist somit frei wählbar, auch zwischen Rastpositionen der Rasteinrichtung.

An der dem Betätigungsarm 32 entgegengesetzten Seite des Schwenkteils 24 ist eine Schrägschwenkbasis 46 mit einem Schwenklager 47 angeordnet, an dem ein Schräg-Schwenkträger 48 um die Schrägschwenkachse 18 schwenkbar gelagert ist. Von einem radial vor den Werkstücktisch-Körper 26 vorstehenden Tragarm 49 steht ein Lagergehäuse 50 nach oben ab. An der bogenförmigen Oberseite des Lagergehäuses 50 verläuft eine bogenförmige Zahnung 51. Neben der Zahnung 51 ist eine Stufenscheibe 52 positioniert, die ebenfalls eine bogenförmige obere Stirnseite hat. An der Vorderseite der Stufenscheibe 52 ist eine Schrägschwenkwinkelskala 53 zur Anzeige des jeweiligen Schrägschwenkwinkels des Schwenkträgers 48 angeordnet.

Die Zahnung 51 bildet einen Bestandteil eines Schrägschwenkgetriebes 54, mit dem eine jeweilige Schrägschwenkposition des Schwenkträgers 48 und somit der an diesem angeordneten Sägeeinrichtung 11 einstellbar ist. Das Schrägschwenkgetriebe 54 ist in einem Schwenkträgergehäuse 55 des Schwenkträgers 48 angeordnet.

Führungsrohre 56 stehen horizontal vor den Schwenkträger 48 vor. Die Führungsrohre 56 sind Linearführungselemente 57 der Linearführung 20. Ein Sägeschlitten 58 ist an den Linearführungselementen 57 linear geführt. Beispielsweise durchdringen die Führungsrohre 56 Führungsbuchsen 59 des Sägeschlittens 58.

Die Sägeeinrichtung 11 ist an einem Kapp-Schwenklager 60 an dem Sägeschlitten 58 um die Kappschwenkachse 19 schwenkbar gelagert. Die Sägeeinrichtung 11 kann von einem Bediener an einem Handgriff 61 an ihrem Gehäuse 62 ergriffen werden und um die Kappschwenkachse 19 geschwenkt oder entlang der Linearführungsachse 21 gezogen werden. In dem Gehäuse 62 ist der Antriebsmotor 13 aufgenommen.

Ferner ist an dem Gehäuse 62 ein Sägeschutz 63 schwenkbar gelagert, der vor Verletzungen durch das Sägeblatt 12 schützt, beim Sägen jedoch in das Gehäuse 62 einschwenkt und das Sägeblatt 12 freigibt. An einem Absauganschluss 64 kann beim Sägen auftretender Staub abgesaugt werden.

Eine Schürze 100 ist an der der Schrägschwenkbasis 46 zugewandten Seite des Gehäuses 62 angeordnet. Die Schürze 100 fängt Späne ab, die vom Sägeblatt 12 nach hinten geschleudert werden und unterstützt die Staubabsaugung. Die Schürze 100 ist zweckmäßigerweise elastisch, so dass sie nachgebend auf dem Werkstücktisch 30 aufliegen kann, wenn die Sägeeinrichtung 11 um die Kappschwenkachse 19 nach oben geschwenkt ist.

Das Schrägschwenkgetriebe 54 ist von der Vorderseite der Säge 10 her bedienbar. Eine zum Schrägschwenkgetriebe 54 führende Welle 65 einer Betätigungseinrichtung 66 des Schrägschwenkgetriebes 54 ist in einem Innenraum des in der Zeichnung rechten Führungsrohrs 56 angeordnet. Ein Handgriff 67 steht vor das vordere, freie Ende des Führungsrohres 56 vor und kann bequem von einem Bediener ergriffen und gedreht werden.

Entsprechend dem Drehsinn beim Drehen des Handgriffes 67, z.B. eines Drehknaufs, schwenkt das Schrägschwenkgetriebe 54 den Schwenkträger 48 um die Schrägschwenkachse 18. Die Drehrichtung und somit die Schwenkrichtung ist durch ein Pfeilsymbol 67a am Handgriff 67 dargestellt.

Das Schrägschwenkgetriebe 54 ist ein Zahngetriebe. Am hinteren, getriebeseitigen Ende der Welle 65 ist ein Antriebszahnrad 160 angeordnet. Das Antriebszahnrad 160 treibt über eine Kraftübertragungsanordnung 161 ein Abtriebszahnrad 162 an. Das Abtriebszahnrad 162 kämmt mit der Zahnung 51.

Die Zahnung 51 verläuft bogenförmig an der Oberseite des Lagergehäuses 50 der Schrägschwenkbasis 46. Die Zahnung 51 umfasst eine Lochreihe, in die Zähne des Abtriebszahnrades 162 eingreifen.

Die Kraftübertragungsanordnung 161 hat bei dem Getriebe 54 eine Doppelfunktion: mit Hilfe der Kraftübertragungsanordnung 161 wird eine Distanz zwischen der Zahnung 51 und dem Antriebszahnrad 160 überbrückt. Zudem wirkt die Kraftübertragungsanordnung 161 wie ein Untersetzungsgetriebe. Dadurch sind die Bedienkräfte am Handgriff 67 gering und die Positioniergenauigkeit bei der Einstellung des Schrägschwenkwinkels der Sägeeinrichtung 11 verbessert.

Die Kraftübertragungsanordnung 161 enthält Übertragungszahnräder 163, 164. Das Antriebsrad 160 kämmt mit dem Übertragungszahnrad 163, das wiederum mit dem Übertragungszahnrad 164 kämmt. Das Übertragungszahnrad 164 und das Abtriebszahnrad 162 sind auf derselben Drehwelle angeordnet oder durch einziges Zahnradbauteil mit z.B. zwei Zahnkränzen gebildet.

Zwar sind die Durchmesser der Übertragungszahnräder 163, 164 sowie des Abtriebszahnrads 162 annähernd gleich. Das Antriebszahnrad 160 hat jedoch einen kleineren Durchmesser, so dass das Schrägschwenkgetriebe 54 insgesamt ein Untersetzungsgetriebe bildet.

Die Zahnräder 160, 162, 163 und 164 sind drehbar an dem Schwenkträger 48 gelagert. Drehachsen 165, 166, 167 der Zahnräder 160, 162 bis 164 sind entlang einer Linie angeordnet. Die Drehachsen 165 bis 167 verlaufen horizontal. Es versteht sich, dass im Rahmen der Erfindung auch ein Getriebe denkbar ist, bei dem die Drehachsen der Zahnräder zueinander winkelig sind, beispielsweise ein Kegelradgetriebe oder dergleichen.

Die jeweilige Schrägschwenkposition des Schwenkträgers 48 bezüglich der Schrägschwenkbasis 46 ist mit einer Schrägschwenkwinkel-Vorwahleinrichtung 170 vorwählbar und einer Feststelleinrichtung 171 festlegbar. Mit der Vorwahleinrichtung 170 kann ein gewünschter Schrägstellwinkel vorgewählt und durch Betätigung des Schrägschwenkgetriebes 54 angefahren werden. Die erreichte Schrägschwenkposition ist mit Hilfe der Feststelleinrichtung 171 festlegbar.

Zwar wäre es denkbar, dass eine Feststelleinrichtung z.B. eine Rasteinrichtung enthält, die bei vorbestimmten Schrägschwenkwinkeln an zugeordneten Rastpositionen verrastet und somit den Schwenkträger 48 drehfest festlegt. Bei der Säge 10 hingegen können die gewünschten Schrägschwenkwinkel frei gewählt und exakt mit Hilfe des Schrägschwenkgetriebes 54 angefahren werden. Sodann kann der Schwenkträger 48 an der jeweiligen Schrägposition mit Hilfe einer Klemmeinrichtung 172 der Feststelleinrichtung 171 drehfest festgelegt bzw. geklemmt werden.

Ein Klemmhebel 173 bildet ein Klemmteil 174 zum Verklemmen mit der Schrägschwenkbasis 46. Der Klemmhebel 173 ist an einer Gehäusepartie 175 des Schwenkträgergehäuses 55 schwenkbar gelagert. Der Klemmhebel 173 durchdringt beispielsweise mit Schwenkspiel eine Ausnehmung 176 ein plattenartiges Lagerteil 177 des Schwenkträgers 48. Ein Arm 178 steht nach unten vor das Lagerteil 177 vor. Nach oben ragt ein Arm 179 vor. Der untere, kürzere Arm 178 dient zum Verklemmen mit der Stufenscheibe 52.

Eine Klemm-Federanordnung 180 beaufschlagt das Klemmteil 174 in Richtung seiner Klemmstellung. Die Klemm-Federanordnung 180 enthält beispielsweise eine schematisch dargestellte Schraubenfeder 181, die sich einerseits am Schwenkträger 48, z.B. dem Schwenkträgergehäuse 55, und andererseits am längeren Arm 179 des Klemmhebels 173 abstützt. Der längere Arm 179 verstärkt die Federkraft der Schraubenfeder 181, so dass das Klemmteil 174 mit einer großen Klemmkraft beaufschlagt ist. Das Klemmteil 174 ist somit mit großer Kraft an der Schrägschwenkbasis bzw. deren Stufenscheibe 52, die insgesamt eine Klemmbasis 182 bildet.

Die Klemmeinrichtung 172 ist mit einer Klemm-Betätigungshandhabe 183 bedienbar. Ein an der Oberseite der Schrägschwenkbasis 46 angeordneter und somit bequem ergreifbarer Schwenkhebel-Handgriff 184 ist an einem Schwenklager 185 schwenkbar gelagert. Der Handgriff 184 ist winkelig. Ein oberer Schenkel 186 dient als laschenartiger Handgriff. Der Schenkel 186 ist zur Anpassung an eine Gehäusekontur des Gehäuses der Schrägschwenkbasis 46 gekrümmt. Ein Betätigungsvorsprung 188 steht nach unten vor den unteren Schenkel 187 des Handgriffs 184 vor. Der untere Schenkel 187 ist an seinem unteren, freien Ende mit dem Schwenklager 185 verbunden. Der Betätigungsvorsprung 188 betätigt das obere, freie Ende des Arms 179 des Klemmhebels 173. Zum Lösen der Klemmeinrichtung 172 wird die Betätigungshandhabe 183 nach oben geschwenkt, wobei der Betätigungsvorsprung 188 den Klemmhebel 173 entgegen der Kraft der Federanordnung 180 betätigt und somit der Klemm-Arm 178 von der Seitenfläche der Stufenscheibe 52 abhebt.

Die Klemmeinrichtung 172 sowie die Vorwahleinrichtung 170 sind neben dem Schrägschwenkgetriebe 54 angeordnet. Ein Vorwahlbolzen 190 ist zwischen dem Getriebe 54 sowie der Klemmeinrichtung 172 positioniert. Der Vorwahlbolzen 190 ist linear beweglich am Schwenkträgergehäuse 55 gelagert. Mit Hilfe einer Betätigungshandhabe 191 kann die Längsposition des Vorwahlbolzens 190 entsprechend der gewünschten Schrägschwenkwinkelposition verändert werden.

Am oberen Ende des Vorwahlbolzens 190 ist ein Drehelement 192, beispielsweise ein Bedienknopf, der Betätigungshandhabe 191 angeordnet. An der Unterseite des Drehelements 192 sind Schrägflächen 193, die sich auf einer Stützfläche 194 des Schwenkträgergehäuses 55 abstützen. Die Längsposition des Vorwahlbolzens 190 wird durch den Verlauf der Schrägflächen 193 und die Drehstellung des Drehelements 192 bestimmt. Eine Feder 195, die vom Vorwahlbolzen 190 durchdrungen ist, beaufschlagt die Schrägflächen 193 mit einer Federspannung gegen die Stützfläche 194.

Je nach Drehposition des Drehelements 192 gelangt der Vorwahlbolzen 190 in der Zeichnung nach unten weiter zur Stufenscheibe 52 vor oder zurück. An seinem dem Drehelement 192 entgegengesetzten Ende bildet der Vorwahlbolzen 190 einen Vorsprung 196, der entsprechend der Drehposition des Drehelements 192 bzw. der Schrägflächen 193 weiter oder weniger weit in Richtung der Stufenscheibe 52 vorsteht. Der Vorsprung 196 schlägt an Stufen 197 an der Oberseite der Stufenscheibe 52 an. Die Stufen 197 korrespondieren mit Schrägschwenkwinkeln, die mit dem Drehelement 192 vorwählbar sind.

Zweckmäßigerweise ist an der Oberseite des Drehelements 192 eine Skala mit Winkelangaben angeordnet, an der die jeweils vorgewählten Schrägschwenkwinkel ersichtlich sind.

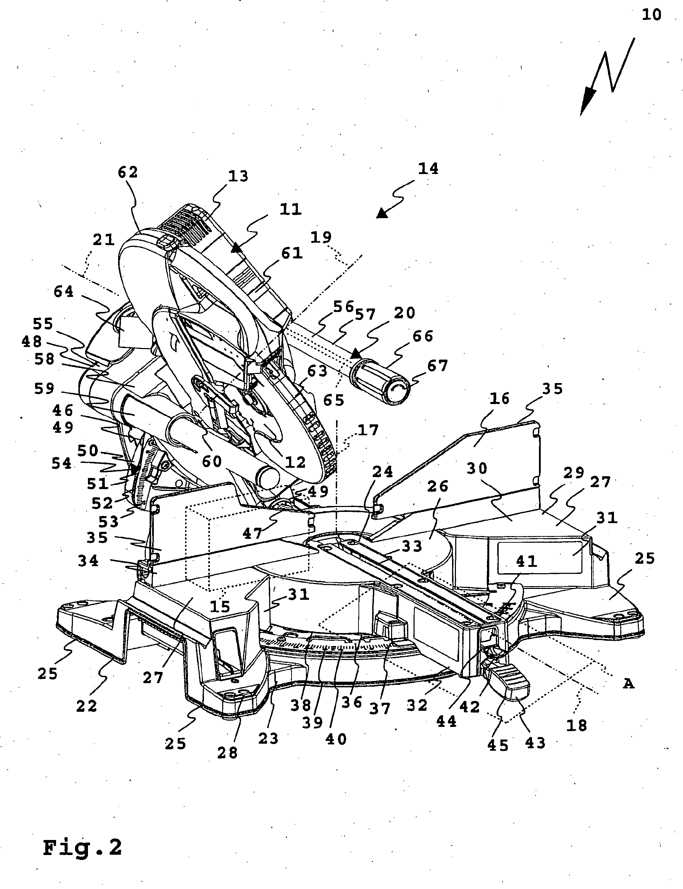

Die Betätigungshandhabe 191 durchdringt eine Öffnung 198 der Klemm-Betätigungshandhabe 183. Die Öffnung 198 ist an dem oberen, längeren Schenkel 186 angeordnet. Wenn der Schwenkhebel-Handgriff 184 in seiner Klemmstellung ist, die in Figur 2 dargestellt ist, ist das Drehelement 192 so weit innen in der Öffnung 198 angeordnet, dass es nicht ergriffen werden kann. Somit ist eine Betätigung der Vorwahleinrichtung 170 nur dann möglich, wenn die Klemmeinrichtung 172 in ihrer Lösestellung ist.

An der Schrägschwenkbasis 46 ist optional eine schematisch dargestellte Federanordnung 200 angeordnet, die den Schwenkträger 48 in Richtung seiner vertikalen Schwenkposition beaufschlagt. Die Federanordnung enthält Federn 201, die im Lagergehäuse 50 angeordnet sind. Beispielsweise erstrecken sich die Federn 201 bogenförmig in einer bogenförmigen Federkammer 202 des Lagergehäuses 50. Ein Mitnehmer des Schwenkträgers 48, der in die Federkammer 202 vorsteht, spannt die Federn 201 vor, wenn der Schwenkträger 48 aus seiner Vertikalstellung in Richtung seitlicher Schrägschwenkpositionen ausgelenkt wird.

## Patentansprüche

1. Säge, insbesondere Gehrungssäge, mit einer Sägeeinrichtung (11), die ein durch einen Antriebsmotor (13) antreibbares Sägeblatt (12) aufweist und an einem Schwenkträger (48) angeordnet ist, der an einer Schrägschwenkbasis (46) um eine horizontale Schrägschwenkachse (18) schrägschwenkbar gelagert ist, wobei die Säge (10) ein Schrägschwenkgetriebe (54) zur Einstellung einer Schrägschwenkposition der Sägeeinrichtung (11) bezüglich der Schrägschwenkbasis (46) aufweist, wobei das Schrägschwenkgetriebe (54) an einer Rückseite der Säge (10) angeordnet ist und eine Betätigungseinrichtung (66) zur manuellen Betätigung aufweist, die zu einer Vorderseite der Säge (10) vorsteht, so dass das Schrägschwenkgetriebe (54) von der Vorderseite her bedienbar ist, und wobei die Sägeeinrichtung (11) zur Durchführung von Linearschnitten an einem Werkstück (15) an einem Sägeschlitten (58) angeordnet ist, **dadurch gekennzeichnet, dass** der Sägeschlitten (58) an einer Linearführung (20) entlang einer Linearführungsachse (21) linear geführt ist, die an dem Schwenkträger (48) angeordnet ist, und dass die Betätigungseinrichtung (66) an der Linearführung (20) angeordnet ist.

2. Säge nach Anspruch 1, **dadurch gekennzeichnet, dass** das Schrägschwenkgetriebe (54) ein Zahngetriebe enthält.

3. Säge nach Anspruch 2, **dadurch gekennzeichnet, dass** die Schrägschwenkbasis (46) eine bogenförmige Zahnung (51) aufweist, mit der ein Zahnrad des Schrägschwenkgetriebes (54) kämmt.

4. Säge nach Anspruch 2 oder 3, **gekennzeichnet durch** eine zwischen ein Antriebszahnrad (160) und ein Abtriebszahnrad (162) des Schrägschwenkgetriebes (54) geschaltete Kraftübertragungsanordnung (161).

5. Säge nach Anspruch 4, **dadurch gekennzeichnet, dass** die Kraftübertragungsanordnung (161) mindestens ein mit dem Antriebszahnrad (160) und/oder dem Abtriebszahnrad (162) kämmendes Übertragungszahnrad (163, 164) aufweist.

6. Säge nach einem der vorhergehenden Ansprüche, **dadurch gekennzeichnet, dass** das Schrägschwenkgetriebe (54) ein Untersetzungsgetriebe bildet.

7. Säge nach einem der vorhergehenden Ansprüche, **dadurch gekennzeichnet, dass** eine Betätigungsrichtung, insbesondere eine Drehrichtung, der Betätigungseinrichtung (66) und eine Schwenkrichtung der Sägeeinrichtung (11) gleichsinnig sind.

8. Säge nach einem der vorhergehenden Ansprüche, **dadurch gekennzeichnet, dass** die Linearführung (20) ein zur Vorderseite der Säge (10) vorstehendes, insbesondere rohrartiges Linearführungselement (57), aufweist, und dass eine Welle (65) der Betätigungseinrichtung (66) in einem Innenraum des Linearführungselements (57) angeordnet ist.

9. Säge nach einem der vorhergehenden Ansprüche, **dadurch gekennzeichnet, dass** sie eine an der Schrägschwenkbasis (46) angeordnete Federanordnung (200) aufweist, die beim einem Schwenken der Sägeeinrichtung (11) um die Schrägschwenkachse (18) aus einer Grundposition in Richtung einer schrägen Position vorgespannt wird.

10. Säge nach einem der vorhergehenden Ansprüche, **gekennzeichnet durch** eine Feststelleinrichtung (171) zum Festlegen der jeweiligen Schrägschwenkposition des Schwenkträgers (48).

11. Säge nach Anspruch 10, **dadurch gekennzeichnet, dass** die Feststelleinrichtung (171) eine Klemmeinrichtung (172) zum Festlegen der Schrägschwenkposition durch eine Klemmung und/oder eine Rasteinrichtung zum Festlegen der Schrägschwenkposition durch eine Verrastung umfasst.

12. Säge nach Anspruch 11, **dadurch gekennzeichnet, dass** die Klemmeinrichtung (172) ein durch eine Klemm-Federanordnung (180) in Richtung seiner Klemmstellung beaufschlagtes Klemmteil (174) enthält.

13. Säge nach Anspruch 11 oder 12, **dadurch gekennzeichnet, dass** die Klemmeinrichtung (172) durch eine Klemm-Betätigungshandhabe (183) mit einem schwenkbaren Schwenkhebel-Handgriff betätigbar ist.

14. Säge nach einem der vorhergehenden Ansprüche, **dadurch gekennzeichnet, dass** sie eine Schrägschwenkwinkel-Vorwahleinrichtung (170) aufweist, mit der ein jeweiliger Schrägschwenkwinkel der Sägeeinrichtung (11) vor dem Verstellen mittels des Schrägschwenkgetriebes (54) vorwählbar ist.

15. Säge nach Anspruch 14, **dadurch gekennzeichnet, dass** die Vorwahleinrichtung (170) einen entsprechend dem gewünschten Schrägschwenkwinkel längsverstellbaren Vorsprung (196) aufweist, der mit einer Stufenanordnung, insbesondere einer Stufenscheibe (52), zusammenwirkt, wobei der Vorsprung (196) beim Erreichen des gewünschten Schrägschwenkwinkels durch Schrägverstellen der Sägeeinrichtung (11) an einer dem gewünschten Schrägschwenkwinkel entsprechenden Stufe (197) der Stufenanordnung anschlägt.

16. Säge nach Anspruch 15, **dadurch gekennzeichnet, dass** die Stufenanordnung durch eine Stufenscheibe (52) gebildet ist, und dass die Stufenscheibe (52) eine Klemmbasis (182) für die Klemmeinrichtung (172) bildet.

17. Säge nach Anspruch 16, **dadurch gekennzeichnet, dass** die bogenförmigen Zahnung (51) an oder neben der Stufenscheibe (52) angeordnet ist.

18. Säge nach einem der Ansprüche 14 bis 17, **dadurch gekennzeichnet, dass** die Vorwahleinrichtung (170) nur dann betätigbar ist, wenn die Klemmeinrichtung (172) in ihrer Lösestellung ist.

19. Säge nach einem der vorhergehenden Ansprüche, **dadurch gekennzeichnet, dass** die Sägeeinrichtung (11) um eine Kappschwenkachse (19) schwenkbar gelagert ist.

## Claims

1. Saw, in particular mitre saw, comprising a sawing apparatus (11), which has a saw blade (12) drivable by a drive motor (13) and which is located on a swivel support (48) mounted on an oblique swivel base (46) for oblique swivelling about a horizontal oblique swivel axis (18), wherein the saw (10) comprises an oblique swivel transmission (54) for adjusting an oblique swivel position of the sawing apparatus (11) relative to the oblique swivel base (46), wherein the oblique swivel transmission (54) is located on a rear side of the saw (10) and comprises an operating device (66) for manual operation, which projects to a front side of the saw (10), so that the oblique swivel transmission (54) can be operated from the front, and wherein the sawing apparatus (11) is located on a saw carriage (58) for performing linear cuts on a workpiece (15), **characterised in that** the saw carriage (58) is guided in a linear motion on a linear guide (20) along a linear guide axis (21), which linear guide (20) is located on the swivel support (48), and **in that** the operating device (66) is located on the linear guide (20).

2. Saw according to claim 1, **characterised in that** the oblique swivel transmission (54) comprises a gear mechanism.

3. Saw according to claim 2, **characterised in that** the oblique swivel base (46) has an arcuate toothing (51), with which a gear of the oblique swivel transmission (54) meshes.

4. Saw according to claim 2 or 3, **characterised by** a power transmission assembly (161) installed between a drive gear (160) and a driven gear (162) of the oblique swivel transmission (54).

5. Saw according to claim 4, **characterised in that** the power transmission assembly (161) comprises at least one transmission gear (163, 164), which meshes with the drive gear (160) and/or with the driven gear (162).

6. Saw according to any of the preceding claims, **characterised in that** the oblique swivel transmission (54) forms a reduction gear.

7. Saw according to any of the preceding claims, **characterised in that** an operating direction, in particular a direction of rotation, of the operating device (66) and a swivelling direction of the sawing apparatus (11) are equidirectional.

8. Saw according to any of the preceding claims, **characterised in that** the linear guide (20) comprises an in particular tubular linear guide element (57), which projects towards the front of the saw (10), and **in that** a shaft (65) of the operating device (66) is located in an interior of the linear guide element (57).

9. Saw according to any of the preceding claims, **characterised in that** it comprises a spring arrangement (200), which is mounted on the oblique swivel base (46) and which is preloaded from a base position towards an oblique position when the sawing apparatus (11) is swivelled about the oblique swivel axis (18).

10. Saw according to any of the preceding claims, **characterised by** a locking device (171) for locking the respective oblique swivelling position of the swivel support (48).

11. Saw according to claim 10, **characterised in that** the locking device (171) comprises a clamping device (172) for locking the oblique swivelling position by clamping and/or a latching device for locking the oblique swivelling position by latching.

12. Saw according to claim 11, **characterised in that** the clamping device (172) includes a clamping part (174), to which pressure is applied towards its clamping position by a clamping spring arrangement (174).

13. Saw according to claim 11 or 12, **characterised in that** the clamping device (172) can be operated by means of a clamp operating handle (183) with a pivotable swivel-lever grip.

14. Saw according to any of the preceding claims, **characterised in that** it comprises an oblique swivel angle preselection device (170), by means of which a respective oblique swivel angle of the sawing apparatus (11) can be preselected before its adjustment by means of the oblique swivel transmission (54).

15. Saw according to claim 14, **characterised in that** the preselection device (170) comprises a projection (196), which can be adjusted longitudinally in accordance with the desired oblique swivel angle and which acts together with a step arrangement, in particular with a stepped disc (52), wherein the projection (196) strikes a step of the step arrangement which corresponds to the desired oblique swivel angle when the desired oblique swivel angle is reached by the oblique adjustment of the sawing apparatus (11).

16. Saw according to claim 15, **characterised in that** the step arrangement is represented by a stepped disc (52), and **in that** the a stepped disc (52) forms a clamping base (182) for the clamping device (172).

17. Saw according to claim 16, **characterised in that** the arcuate toothing (51) is located on or adjacent to the stepped disc (52).

18. Saw according to any of claims 14 to 17, **characterised in that** the preselection device (170) can only be operated in the release position of the clamping device (172).

19. Saw according to any of the preceding claims, **characterised in that** the sawing apparatus (11) is pivotable mounted for swivelling about a mitre swivel axis (10).

## Revendications

1. Scie, en particulier scie à onglet, avec un dispositif de sciage (11) qui présente une lame de scie (12) pouvant être entraînée par un moteur d'entraînement (13) et est agencé sur un support pivotant (48) qui est logé de manière à pivoter en oblique sur une base de pivotement oblique (46) autour d'un axe de pivotement oblique (18) horizontal, la scie (10) présentant un engrenage de pivotement oblique (54) pour le réglage d'une position de pivotement oblique du dispositif de sciage (11) par rapport à la base de pivotement oblique (46), l'engrenage de pivotement oblique (54) étant agencé sur un côté arrière de la scie (10) et présentant un dispositif d'actionnement (66) pour l'actionnement manuel qui dépasse d'un côté avant de la scie (10) de sorte que l'engrenage de pivotement oblique (54) puisse être manipulé par le côté avant, et le dispositif de sciage (11) étant disposé sur un chariot de scie (58) pour la réalisation de coupes linéaires sur une pièce (15), **caractérisée en ce que** le chariot de scie (58) est guidé de manière linéaire sur un guidage linéaire (20) le long d'un axe de guidage linéaire (21) qui est agencé sur le support pivotant (48) et **en ce que** le dispositif d'actionnement (66) est agencé sur le guidage linéaire (20).

2. Scie selon la revendication 1, **caractérisée en ce que** l'engrenage de pivotement oblique (54) contient un engrenage denté.

3. Scie selon la revendication 2, **caractérisée en ce que** la base de pivotement oblique (46) présente une denture (51) arquée, avec laquelle une roue dentée de l'engrenage de pivotement oblique (54) s'engrène.

4. Scie selon la revendication 2 ou 3, **caractérisée par** un agencement de transmission de force (161) monté entre une roue dentée d'entraînement (160) et une roue dentée de sortie (162) de l'engrenage de pivotement oblique (54).

5. Scie selon la revendication 4, **caractérisée en ce que** l'agencement de transmission de force (161) présente au moins une roue dentée de transmission (163, 164) s'engrenant avec la roue d'entrée d'entraînement (160) et/ou la roue dentée de sortie (162).

6. Scie selon l'une quelconque des revendications précédentes, **caractérisée en ce que** l'engrenage de pivotement oblique (54) forme un réducteur de vitesse.

7. Scie selon l'une quelconque des revendications précédentes, **caractérisée en ce qu'**un sens d'actionnement, en particulier un sens de rotation, du dispositif d'actionnement (66) et un sens de pivotement du dispositif de sciage (11) sont identiques.

8. Scie selon l'une quelconque des revendications précédentes, **caractérisée en ce que** le guidage linéaire (20) présente un élément de guidage linéaire (57) en particulier tubulaire, dépassant du côté avant de la scie (10) et **en ce qu'**un arbre (65) du dispositif d'actionnement (66) est agencé dans un espace intérieur de l'élément de guidage linéaire (57).

9. Scie selon l'une quelconque des revendications précédentes, **caractérisée en ce qu'**elle présente un agencement à ressort (200) agencé sur la base de pivotement oblique (46) qui est précontraint lors d'un pivotement du dispositif de sciage (11) autour de l'axe de pivotement oblique (18) d'une position de base en direction d'une position en oblique.

10. Scie selon l'une quelconque des revendications précédentes, **caractérisée par** un dispositif de fixation (171) pour la fixation de la position de pivotement oblique respective du support pivotant (48).

11. Scie selon la revendication 10, **caractérisée en ce que** le dispositif de fixation (171) comporte un dispositif de serrage (172) pour la fixation de la position de pivotement oblique par un serrage et/ou un dispositif d'encliquetage pour la fixation de la position de pivotement oblique par un encliquetage.

12. Scie selon la revendication 11, **caractérisée en ce que** le dispositif de serrage (172) contient une partie de serrage (174) sollicitée par un agencement à ressort de serrage (180) en direction de sa position de serrage.

13. Scie selon la revendication 11 ou 12, **caractérisée en ce que** le dispositif de serrage (172) est actionnable par une poignée d'actionnement de serrage (183) avec une poignée pivotante à levier pivotant.

14. Scie selon l'une quelconque des revendications précédentes, **caractérisée en ce qu'**elle présente un dispositif de présélection d'angle de pivotement oblique (170), avec lequel un angle de pivotement oblique respectif du dispositif de sciage (11) peut être présélectionné avant le réglage à l'aide de l'engrenage de pivotement oblique (54).

15. Scie selon la revendication 14, **caractérisée en ce que** le dispositif de présélection (170) présente une saillie (196) réglable en longueur selon l'angle de pivotement oblique souhaité, laquelle coagit avec un agencement étagé en particulier une poulie à gradins (52), la saillie (196) butant lors de l'atteinte de l'angle de pivotement oblique souhaité par réglage en oblique du dispositif de sciage (11) contre un gradin (197) correspondant à l'angle de pivotement oblique souhaité de l'agencement étagé.

16. Scie selon la revendication 15, **caractérisée en ce que** l'agencement étagé est formé par une poulie à gradins (52) et **en ce que** la poulie à gradins (52) forme une base de serrage (182) pour le dispositif de serrage (172).

17. Scie selon la revendication 16, **caractérisée en ce que** la denture arquée (51) est agencée sur ou à côté de la poulie à gradins (52).

18. Scie selon l'une quelconque des revendications 14 à 17, **caractérisée en ce que** le dispositif de présélection (170) est actionnable uniquement si le dispositif de serrage (172) est dans sa position de détachement.

19. Scie selon l'une quelconque des revendications précédentes, **caractérisée en ce que** le dispositif de sciage (11) est logé de manière pivotante autour d'un axe de pivotement de coupe (19).
